# EUROPEAN PATENT SPECIFICATION

(11) **EP 1 379 348 B1**
(45) Date of publication and mention of the grant of the patent: **23.03.2005**
(21) Application number: 03704356.9
(22) Date of filing: 03.01.2003
(51) Int. Cl.: B23B 31/00, B23Q 3/08

(54) **APPARATUS FOR SUBJECTING WORKPIECES HAVING ANNULAR SHAPE TO MACHINING OF THEIR INNER AND OUTER SURFACES**
VORRICHTUNG ZUM BEARBEITEN EINES RINGFÖRMIGEN WERKSTÜCKS AUF DESSEN INNEN- UND AUSSENFLÄCHE
APPAREIL PERMETTANT DE SOUMETTRE DES PIECES A USINER DE FORME ANNULAIRE A UN USINAGE DE LEURS SURFACES INTERIEURES ET EXTERIEURES

(30) Priority: 10.01.2002 IT BO20020009
(43) Date of publication of application: 14.01.2004
(73) Proprietor: MINGANTI INTERNATIONAL LIMITED, Dublin 2 (IE)
(72) Inventor: CALDANA, Marcus, I-40129 Bologna (IT)
(74) Representative: Porsia, Dino, Dr.
(86) International application number: PCT/EP2003/000030
(87) International publication number: WO 2003/057392

(56) References cited:
- DE-A- 19 920 365
- JP-A- 51 038 181
- PATENT ABSTRACTS OF JAPAN vol. 011, no. 067 (M-566), 28 February 1987 (1987-02-28) -& JP 61 226203 A (AGENCY OF IND SCIENCE & TECHNOL), 8 October 1986 (1986-10-08) cited in the application
- PATENT ABSTRACTS OF JAPAN vol. 018, no. 472 (M-1667), 2 September 1994 (1994-09-02) -& JP 06 155117 A (OKUMA MACH WORKS LTD), 3 June 1994 (1994-06-03)

## Description

The operation of positioning and securing onto the chuck of machine tools of workpieces having an annular shape to be subjected to finishing operations presently gives origin to remarkable technical and economical problems, whenever same cannot be clamped in radial direction, because they could be deformed and because they could be damaged on their inner or outer surface which was previously machined and then subjected to the action of the clamping means.

In order to ensure the precise and quick machining onto the inner diameter and/or onto the outer one, with a single positioning onto the chuck of a machine tool, there are known the Italian patent applications BO 2001 A 190 and BO 2001 A 337 belonging to the same applicant (as in the present application) which provide for the disposition onto one of the slides of the machine tool, of automatic positioning devices, which clamp the workpiece to be machined onto the chuck of the machine with an axial clamping, by leaving the workpiece to be machine alternately free on its inner surface or on its outer surface to be subjected to machining operations. These solutions require the cyclical and automatic substitution of the workpiece clamping devices, so that they introduce dead times during the working cycle of the workpiece itself. The positioning of the clamping devices must be moreover carried out with utmost precision and with repeated checks by the machine, these conditions being not acceptable for high working speeds.

The use of an adhesive to secure workpieces is known, for example, from documents US 5 711 835 and JP 61226203 which however do not teach how to secure workpieces having annular shape for the precision machining of their inner and outer surfaces, with a single positioning onto the chuck of machine tools.

Japanese published patent application No 51-38181 teaches the use of an apparatus for subjecting workpieces having annular shape to precision machining of their inner and/or outer surfaces, with a single positioning onto a chuck of the machine tool, comprising means for co-axially causing the workpiece to be machined to be glued by an adhesive onto a supporting base structure. This apparatus however is clearly used for machining small workpieces which can be held by an horizontal-axis chuck, and not workpieces having great dimensions, which must be necessarily machined by a vertical lathe having a vertical-axis chuck.

According to the invention, there is adopted an apparatus as described in the appended single claim, which consents the machining of workpieces having great dimensions.

Further features of the invention, and the advantages deriving therefrom, will appear better evident form the following description of a preferred embodiment of same, illustrated by way of non limiting example in the Figures of the annexed sheets of drawings, in which:
- Figure 1 shows laterally and with parts in section a workpiece secured by employing an adhesive onto the temporary base structure and during the machining phase of the machine tool;
- Figures 2, 3, 4 and 5 show laterally and with parts in section as many steps of the automatic working cycle for the co-axial securing of a workpiece onto a temporary support base structure, by employing and adhesive.

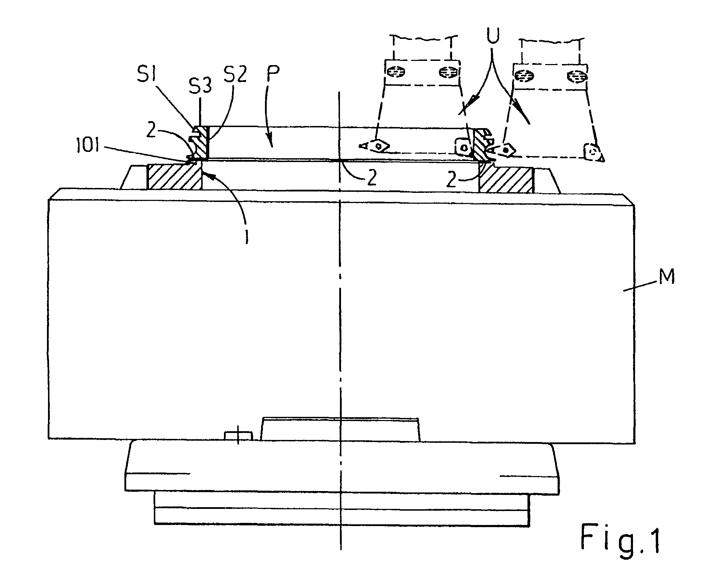

In Figure 1, reference letter P indicates the annular workpiece which must be precision machined both on its annular outer surface and on its annular inner surface and which for this purpose rests by its greater base, in a perfect condition of coaxiality onto the annular projection 101 of a strong cylindrical base structure 1, made of any suitable material, for example having as well an annular or other suitable shape. The workpiece P is secured onto the base structure 1 by means of spots suitably distributed on the projection 101, of any suitable quick setting adhesive, for example the adhesive commercially known by the registered trademark LOCTITE of grade 380 or of grade 480.

After the setting of the adhesive, the piece can be automatically loaded onto the chuck M of the machine tool and can be clamped in place by the jaws or by other suitable means which now act on the base structure 1, so that they do not minimally deform the workpiece P which can be machined with precision and in a quick manner by the tools U of a single machine, with tolerances up to the order of three microns, both on the outer surface S1 and on the inner surface S2 and, if required, also on the front surface S3.

After the machining on the machine tool, it will be possible to detach the workpiece from the base structure 1 with a mechanical action which breaks the lattice of the adhesive, if same is of the 380 grade type. For this purpose, it is not excluded that the base structure 1 may be provided with apertures and/or holes which permit to suitable extractors to operate onto the base of the workpiece secured to the base structure. If instead the adhesive is of the 480 grade type, same is neutralized by means of a physical heating action, for example an induction action, at the temperature of about 150°, for a time period of about 20 seconds. It is to be understood that other solutions can be employed for the neutralization of the adhesive.

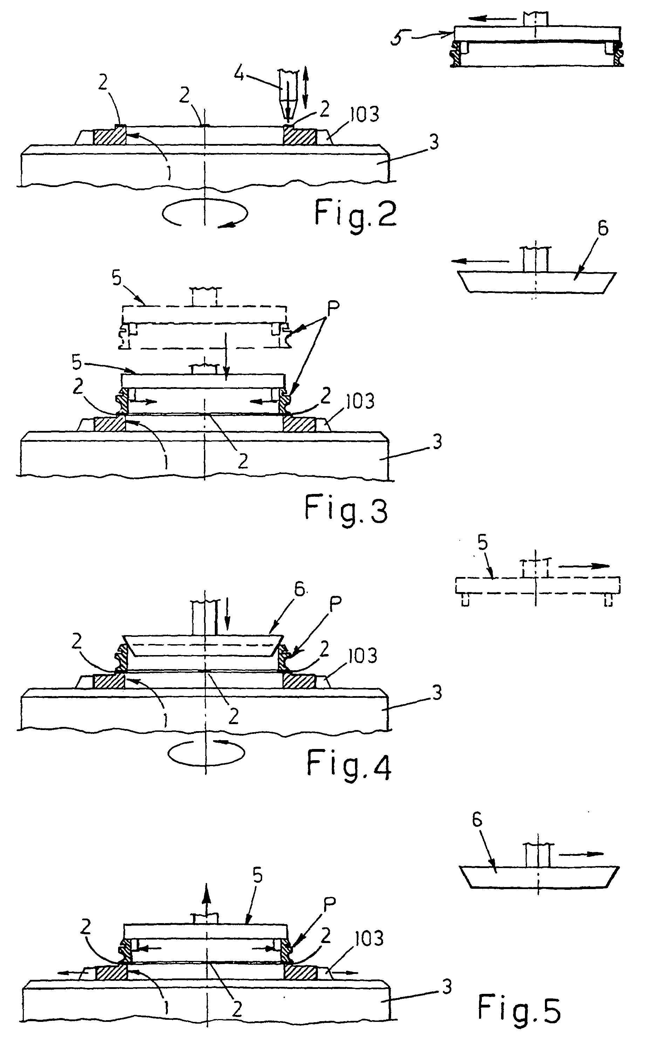

Referring to Figures 2 to 5 there is now described the sequence of working steps of a possible apparatus for securing the workpieces onto the relative supporting base structures. In Figure 2, reference numeral 3 indicates a vertical axis collet or chuck onto which a manipulator has previously positioned the base structure 1 which is clamped for example from the exterior and co-axially by the jaws 103 of the chuck itself. The chuck together with the base structure 1 is carried into rotation about its axis, while a manipulator with a distributor 4 provides for the distribution onto the projection 101 of the base structure 1 of the adhesive spots 2. The workpiece P to be machined is taken by a gripper manipulator 5 and is positioned onto the projection 101 of the base structure 1, already provided with adhesive spots 2. During this step the chuck 3 is for example at standstill or it is stopped. Subsequently the gripper 5 leaves the workpiece and onto this latter there is moved and axially lowered an idle tailstock center 6, as shown in Figure 5, which has the double function of pressing the workpiece onto the base structure and to precision align same axially with respect to said base structure. During this step the chuck 3 rotates for the time which is necessary for the setting of the adhesive. Subsequently, as shown in Figure 5, the chuck 3 is stopped and the tailstock center 6 leaves the workpiece P which is clamped by the gripper 5 or another gripper and is moved away from the chuck, the jaws of which leave free the base structure 1.

## Claims

1. Apparatus for subjecting workpieces having annular shape to precision machining of their inner and outer surfaces, with a single positioning onto the chuck of a machine tool having an axis of rotation, according to a process comprising the following steps:
- positioning and axially aligning the workpiece horizontally by one of its bases onto a supporting base structure (1) having a cylindrical and annular shape, co-axially provided with an annular projection (101), onto which there can rest the base of the workpiece (P) to be machined;
- securing the base of the workpiece onto the annular projection (101) of the base structure (1) by means of an adhesive (2) distributed suitably located along the surface of the annular projection (101) which is controlled to rotate about a vertical axis;
- positioning the base structure (1) carrying the workpiece (P) glued thereon onto the chuck of the machine tool by clamping the said base structure (1) while the workpiece itself can be machined onto its inner and/or outer surfaces, there being provided that after its machining the workpiece be detached from the base structure by means of the neutralization of the adhesion action of the adhesive,
**characterized by the fact of comprising**
means for co-axially causing the workpiece (P) to be machined to be glued by an adhesive onto the supporting base structure (1) and means for subsequently detaching the machined workpiece from the said base structure, in which the means for the adhesion of the workpiece (P) onto the base structure (1) comprise a collet or chuck having a vertical axis and directed upwardly, a manipulator with self-centring chuck which, upon control, positions the base structure co-axially onto said chuck which clamps same, means for positioning on the projection (101) of the structure base a device which upon control distributes spots of adhesive onto said projection of the base structure, while the chuck is rotated about its axis, a manipulator with jaws (5) for co-axially positioning the workpiece onto the projection (101) of the base structure carrying the adhesive spots, a manipulator with a self-centring idle center (6) which is axially pushed onto the workpiece in order to press same and to align it axially onto the base structure, while this latter is preferably caused to rotate by the supporting chuck.

## Patentansprüche

1. Vorrichtung zum Feinbearbeiten der Innen- und Außenflächen von Werkstücken mit Ringform mit einem einzigen Positionieren am Futter einer Werkzeugmaschine mit einer Drehachse gemäß einem Vorgang mit den folgenden Schritten:
- dem Positionieren und axialen Ausrichten des Werkstückes in horizontaler Richtung über einen seiner Böden an einer Bodenstützstruktur (1) mit Zylinderund Ringform, die koaxial mit einem ringförmigen Vorsprung (101) versehen ist, an welchem der Boden des zu bearbeitenden Werkstückes (P) ruhen kann;
- dem Festlegen des Bodens des Werkstückes an dem ringförmigen Vorsprung (101) der Bodenstruktur (1) mit Hilfe eines Klebers (2), der zweckmäßig angeordnet entlang der Fläche des ringförmigen Vorsprungs (101) verteilt ist, der zur Drehung um eine vertikale Achse gesteuert ist;
- dem Positionieren der Bodenstruktur (1), die das auf sie aufgeklebte Werkstück (P) trägt, an dem Futter der Werkzeugmaschine durch Verklemmen der Bodenstruktur (1), während das Werkstück selbst an seinen Innen- und/oder Außenflächen bearbeitet werden kann, wobei vorgesehen ist, daß nach dem Bearbeiten des Werkstückes durch die Neutralisation der Klebewirkung des Klebers das Werkstück von der Bodenstruktur gelöst wird,
**dadurch gekennzeichnet, daß** Mittel, die koaxial bewirken, daß das zu bearbeitende Werkstück mittels eines Klebers an der Bodenstützstruktur (1) angeklebt wird, und Mittel zum nachfolgenden Lösen des bearbeiteten Werkstückes von der Bodenstruktur vorgesehen sind, wobei die Mittel zum Anhaften des Werkstückes (P) an der Bodenstruktur (1) eine Hülse oder ein Futter, das bzw. die eine vertikale Achse besitzt und nach oben gerichtet ist, eine Handhabungsvorrichtung mit selbstzentrierendem Futter, die gesteuert die Bodenstruktur koaxial an dem Futter positioniert, welches selbige verklemmt, Mittel zum Positionieren einer Vorrichtung an dem Vorsprung (1) der Bodenstruktur, die gesteuert Klebstofftupfen an dem Vorsprung der Bodenstruktur verteilen, während das Futter um seine Achse gedreht wird, eine Handhabungsvorrichtung mit Backen (5) zum koaxialen Positionieren des Werkstückes an dem Vorsprung (101) der die Klebstofftupfen tragenden Bodenstruktur und eine Handhabungsvorrichtung mit einer selbstzentrierenden Leerlaufspitze besitzt, welche axial an das Werkstück angedrückt wird, um selbiges gegen die Bodenstruktur zu pressen und zu dieser auszurichten, wobei letztere durch das Haltefutter vorzugsweise in Rotation versetzt wird.

## Revendications

1. Dispositif destiné à soumettre des pièces d'ouvrage ayant une forme annulaire à un usinage de précision de leurs surfaces intérieures et extérieures, avec un seul positionnement sur le mandrin d'une machine-outil présentant un axe de rotation, conformément à un processus comprenant les étapes suivantes :
- positionner et aligner axialement la pièce d'ouvrage horizontalement par l'intermédiaire de l'une de ses bases sur une structure de base de support (1) présentant une forme cylindrique et annulaire, coaxialement munie d'une saillie annulaire (101), sur laquelle peut reposer la base de la pièce d'ouvrage (P) à usiner,
- fixer la base de la pièce d'ouvrage sur la saillie annulaire (101) de la structure de base (1) au moyen d'un adhésif (2) réparti de façon appropriée en étant situé le long de la surface de la saillie annulaire (101), laquelle est commandée pour tourner autour d'un axe vertical,
- positionner la structure de base (1) portant la pièce d'ouvrage (P) collée sur celle-ci sur le mandrin de la machine-outil en serrant ladite structure de base (1) pendant que la pièce d'ouvrage elle-même peut être usinée sur ses surfaces intérieures et/ou extérieures, en étant prévu qu'après son usinage, la pièce d'ouvrage soit détachée de la structure de base au moyen de la neutralisation de l'action d'adhésion de l'adhésif,
**caractérisé par le fait qu'**il comprend
un moyen destiné à amener coaxialement la pièce d'ouvrage (P) à usiner à être collée par un adhésif sur la structure de base de support (1) et un moyen destiné à détacher par la suite la pièce d'ouvrage usinée de ladite structure de base, le moyen destiné à l'adhésion de la pièce d'ouvrage (P) sur la structure de base (1) comprenant une pince ou un mandrin comportant un axe vertical et orienté vers le haut, un manipulateur comportant un mandrin à centrage automatique qui, lors d'une commande, positionne la structure de base coaxialement sur ledit mandrin qui serre celle-ci, un moyen destiné à positionner sur la saillie (101) de la structure de base un dispositif qui lors d'une commande répartit des points d'adhésif sur ladite saillie de la structure de base, pendant que le mandrin est entraîné en rotation autour de son axe, un manipulateur comportant des mâchoires (5) destinées à positionner coaxialement la pièce d'ouvrage sur la saillie (101) de la structure de base supportant les points d'adhésif, un manipulateur comportant une contrepointe inactive à centrage automatique (6) qui est appuyée axialement sur la pièce d'ouvrage de manière à comprimer celle-ci et à l'aligner axialement sur la structure de base, pendant que cette dernière est amenée de préférence à tourner au moyen du mandrin de support.
